(19) Europäisches Patentamt
European Patent Office
Office européen des brevets

(11) **EP 4 653 497 A1**

(12) **EUROPEAN PATENT APPLICATION**
published in accordance with Art. 153(4) EPC

(43) Date of publication:
**26.11.2025 Bulletin 2025/48**

(21) Application number: **24744667.7**

(22) Date of filing: **17.01.2024**

(51) International Patent Classification (IPC):
***C08L 69/00*** *(2006.01)* ***C08G 64/04*** *(2006.01)*
***C08K 3/32*** *(2006.01)* ***C08K 5/41*** *(2006.01)*
***C08K 5/42*** *(2006.01)* ***H01B 1/06*** *(2006.01)*
***H01M 10/052*** *(2010.01)* ***H01M 10/0565*** *(2010.01)*
***H01M 10/0567*** *(2010.01)*

(52) Cooperative Patent Classification (CPC):
**C08G 64/04; C08K 3/32; C08K 5/41; C08K 5/42; C08L 69/00; H01B 1/06; H01M 10/052; H01M 10/0565; H01M 10/0567;** Y02E 60/10

(86) International application number:
**PCT/JP2024/001047**

(87) International publication number:
**WO 2024/154746 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.01.2023 JP 2023007184**

(71) Applicant: **MITSUBISHI GAS CHEMICAL COMPANY, INC.**
**Chiyoda-ku**
**Tokyo 100-8324 (JP)**

(72) Inventors:
- **GOTO, Toshihito**
  **Kamisu-shi, Ibaraki 314-0102 (JP)**
- **OGAWA, Noriyoshi**
  **Kamisu-shi, Ibaraki 314-0102 (JP)**
- **HORIUCHI, Shoki**
  **Kamisu-shi, Ibaraki 314-0102 (JP)**

(74) Representative: **Hoffmann Eitle**
**Patent- und Rechtsanwälte PartmbB**
**Arabellastraße 30**
**81925 München (DE)**

# (54) RESIN COMPOSITION INCLUDING POLYCARBONATE RESIN, AND ELECTROLYTIC SOLUTION, FILM, AND SOLID ELECTROLYTE INCLUDING THE SAME

(57) The present invention provides a resin composition that includes a polycarbonate resin and a lithium salt, wherein: the polycarbonate resin includes a structural unit (A) derived from at least one selected from the group consisting of bisphenol A, bisphenol C, bisphenol MIBK, bisphenol BPAF, bisphenol Z, and bisphenol AP, which are represented by the structural formulas shown here; and the terminal structure of the polycarbonate resin includes a terminal structure derived from the polyalkylene glycol monoalkyl ether represented by general formula (1). (In general formula (1), $R_1$ represents a C2-20 alkylene group, $R_2$ represents a C1-20 alkyl group, and n represents an integer from 3 to 120.)

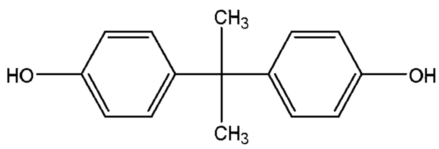

(Bisphenol A)

EP 4 653 497 A1

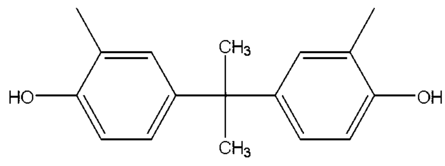

(Bisphenol C)

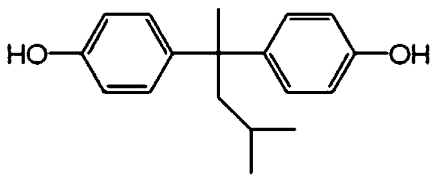

(Bisphenol MIBK)

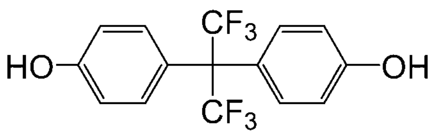

(Bisphenol BPAF)

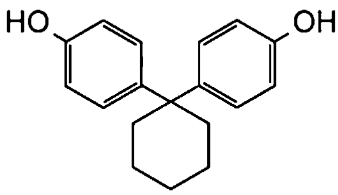

(Bisphenol Z)

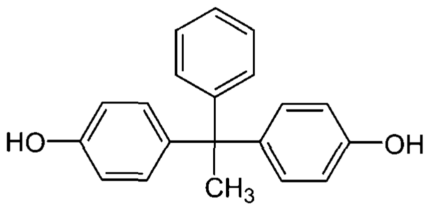

(Bisphenol AP)

$$HO-\left(-R_1-O-\right)_n-R_2 \quad (1)$$

## Description

### TECHNICAL FIELD

The present invention relates to a resin composition containing a polycarbonate resin, and to an electrolytic solution, a film, and a solid electrolyte containing the same.

### BACKGROUND ART

Certain polycarbonate resins dissolved in organic solvents are known for their use as inks, paints, etc., and various organic solvents are used for this purpose. Moreover, the use of carbonate-based organic solvents such as dimethyl carbonate and ethylene carbonate is expanding, especially as solvents for electrolytic solutions for lithium-ion batteries. However, there was room for improvement for use as a polycarbonate electrolytic solution because polycarbonate resins have low solubility in carbonate-based organic solvents, making it difficult to obtain a coating film. Various studies have been conducted to solve this problem. For example, it has been proposed to add methylene chloride as a solvent to give a colloidal solution for coating (Patent literature 1). However, even with methylene chloride, the solubility of polycarbonate resins in carbonate-based organic solvents was not satisfactory, leaving room for further improvement.

### CITATION LIST

#### Patent Literature

Patent literature 1: Japanese Unexamined Patent Application Publication No. 2000-357533

### SUMMARY OF INVENTION

#### Technical Problem

The present invention allows a lithium salt to be dissolved in a nonpolar solvent and aims to provide a resin composition containing a lithium salt and a polycarbonate resin in a homogeneous state. Furthermore, the present invention aims to provide an electrolytic solution containing this resin composition and having a high conductivity.

#### Solution to Problem

As a result of diligent studies to solve the above problem, the present inventors have found that the use of a polycarbonate resin containing a specific monomer-derived structural unit and a polyalkylene glycol chain in the end structure makes it possible to dissolve a lithium salt in a nonpolar solvent, which is difficult with conventional polycarbonate resins, and to obtain a resin composition containing a lithium salt and the polycarbonate resin in a homogeneous state. In addition, the present inventors found that such a resin composition has a high conductivity when used as an electrolytic solution, thereby completing the present invention.

Thus, the present invention is as follows.

<1> A resin composition comprising a polycarbonate resin and a lithium salt, wherein:

the polycarbonate resin contains a structural unit (A) derived from at least one selected from the group consisting of bisphenol A, bisphenol C, bisphenol MIBK, bisphenol BPAF, bisphenol Z, and bisphenol AP, which are represented by the following structural formulae; and
the end structure of the polycarbonate resin comprises an end structure derived from a polyalkylene glycol monoalkyl ether represented by general formula (1) below:

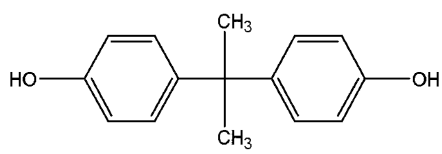

(Bisphenol A)

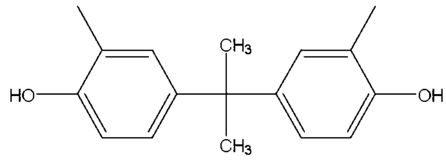

(Bisphenol C)

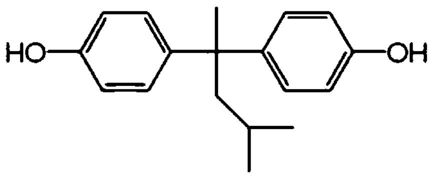

(Bisphenol MIBK)

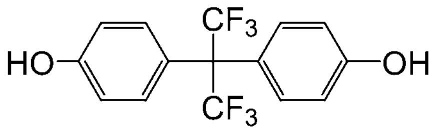

(Bisphenol BPAF)

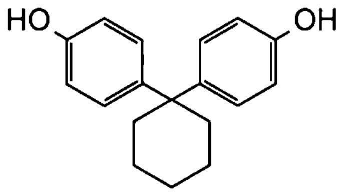

(Bisphenol Z)

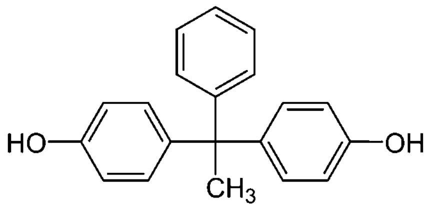

(Bisphenol AP)

$$HO-\!\left(R_1-O\right)_n-R_2 \qquad (1)$$

in general formula (1), $R_1$ represents a C2-C20 alkylene group, $R_2$ represents a C1-C20 alkyl group, and n represents an integer from 3-120.

<2> The resin composition according to <1> above, comprising the polycarbonate resin in an amount of 30.0-99.0 mass% relative to the total amount of the polycarbonate resin and the lithium salt in the resin composition.
<3> The resin composition according to <1> or <2> above, wherein the number-average molecular weight of the polyalkylene glycol monoalkyl ether is 200-5,000.
<4> The resin composition according to any one of <1>-<3> above, wherein the viscosity-average molecular weight (Mv) of the polycarbonate resin is 5,000-50,000.
<5> The resin composition according to any one of <1>-<4> above, comprising the lithium salt in an amount of 1.0-70 mass% relative to the total amount of the polycarbonate resin and the lithium salt in the resin composition.
<6> The resin composition according to any one of <1>-<5> above, wherein the lithium salt comprises at least one selected from the group consisting of lithium bis(trifluoromethanesulfonyl)imide, lithium trifluoromethanesulfonate, lithium hexafluorophosphate, lithium bis(fluorosulfonyl)imide, and lithium tetrafluoroborate.
<7> An electrolytic solution comprising the resin composition according to any one of < 1>-<6> above.
<8> The electrolytic solution according to <7> above, wherein the conductivity of the electrolytic solution is 1-500 mS/cm.
<9> A film comprising the resin composition according to any one of <1>-<6> above.

<10> A solid electrolyte comprising the resin composition according to any one of <1>-<6> above.

## ADVANTAGEOUS EFFECTS OF INVENTION

According to the present invention, a lithium salt can be dissolved in a nonpolar solvent and a resin composition containing a lithium salt and a polycarbonate resin in a homogeneous state can be obtained. Furthermore, according to the present invention, an electrolytic solution containing this resin composition and having a high conductivity can be obtained.

## DESCRIPTION OF EMBODIMENTS

Hereinafter, the present invention will be described in detail by illustrating embodiments, examples, and the like, but the present invention is not limited to the embodiments, examples, or the like illustrated below and may be modified as desired without departing from the gist of the present invention.

[Resin composition]

A resin composition of the present invention contains a polycarbonate resin having a specific structure and a lithium salt.

The resin composition of the present invention preferably contains the polycarbonate resin in an amount of 30.0-99.0 mass%, more preferably 50.0-99.0 mass%, still more preferably 60.0-99.0 mass%, yet still more preferably 70.0-99.0 mass%, and particularly preferably 75.0-96.0 mass%, relative to the total amount of the polycarbonate resin and the lithium salt.

The resin composition of the present invention preferably contains the lithium salt in an amount of 1.0-70 mass%, more preferably 1.0-50 mass%, still more preferably 1.0-40 mass%, yet still more preferably 1.0-30 mass%, and particularly preferably 4.0-25 mass%, relative to the total amount of the polycarbonate resin and the lithium salt.

<Polycarbonate resin>

The polycarbonate resin used in the present invention contains a structural unit (A) derived from at least one selected from the group consisting of bisphenol A, bisphenol C, bisphenol MIBK, bisphenol BPAF, bisphenol Z, and bisphenol AP, which are represented by the following structural formulae.

The end structure of the polycarbonate resin contains an end structure derived from a polyalkylene glycol monoalkyl ether represented by general formula (1) below.

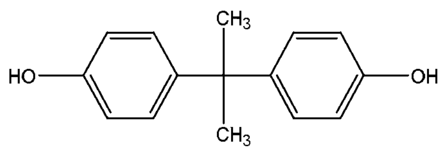

(Bisphenol A)

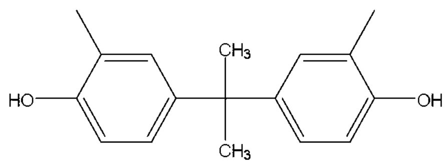

(Bisphenol C)

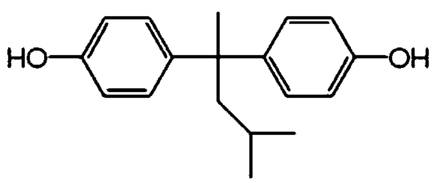

(Bisphenol MIBK)

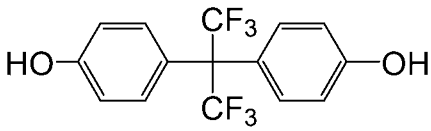

(Bisphenol BPAF)

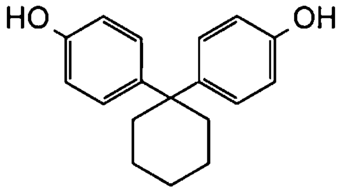

(Bisphenol Z)

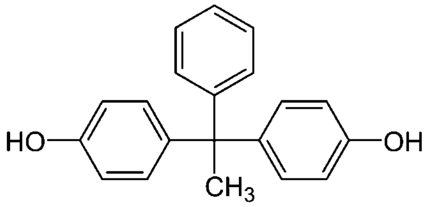

(Bisphenol AP)

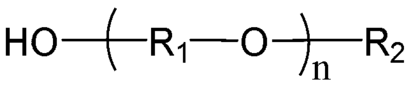

(1)

In general formula (1), $R_1$ represents a C2-C20 (preferably C2-C10, more preferably C2-C5, still more preferably C2 or C3, and particularly preferably C2) alkylene.

In general formula (1), $R_2$ represents a C1-C20 (preferably C1-C10, more preferably C1-C5, still more preferably C1-C3, and particularly preferably C1) alkyl group.

In general formula (1), n represents an integer from 3-120 (preferably 7-50, and more preferably 8-25).

The number-average molecular weight of the polyalkylene glycol monoalkyl ether used in the present invention is preferably 200-5,000, more preferably 300-4,000, still more preferably 300-2,000, yet still more preferably 300-1,200, and particularly preferably 400-1,000.

The viscosity-average molecular weight (Mv) of the polycarbonate resin used in the present invention is preferably 5,000-50,000, more preferably 7,000-40,000, and particularly preferably 7,000-30,000. The viscosity-average molecular weight (Mv) can be determined by the method described in the examples below.

In the polycarbonate resin used in the present invention, the proportion of the structural unit (A) is preferably 80-100 mol%, more preferably 90-100 mol%, and particularly preferably 100 mol%, relative to all structural units constituting the polycarbonate resin.

The polycarbonate resin of the present invention may contain a structural unit other than the structural unit (A) as long as the effect of the present invention is not impaired.

In a preferred embodiment of the present invention, polyalkylene glycol monoalkyl ether represented by general formula (1) above can be used as a molecular weight regulator (terminator) when preparing the polycarbonate resin, to provide the end structure with a polyalkylene glycol chain.

The polycarbonate resin used in the present invention can be produced by reacting at least one selected from the group consisting of bisphenol A, bisphenol C, bisphenol MIBK, bisphenol BPAF, bisphenol Z, and bisphenol AP with a carbonate ester-forming compound. Accordingly, it can be produced by employing a known method used to produce a polycarbonate resin derived from bisphenol A, for example, the direct reaction of a bisphenol with phosgene (phosgene method) or the transesterification reaction of a bisphenol with a bisaryl carbonate (transesterification method).

In the phosgene method, at least one selected from the group consisting of bisphenol A, bisphenol C, bisphenol MIBK, bisphenol BPAF, bisphenol Z, and bisphenol AP is reacted with phosgene, usually in the presence of an acid-binding agent and a solvent. For example, pyridine, an alkali metal hydroxide such as sodium hydroxide or potassium hydroxide, or the like may be used as the acid-binding agent, while methylene chloride, chloroform, or the like may be used as the solvent. In addition, in order to accelerate the condensation polymerization reaction, it is preferable to add a catalyst, for example, a tertiary amine such as triethylamine or a quaternary ammonium salt such as benzyltriethylammonium chloride. In addition, polyalkylene glycol monoalkyl ether represented by general formula (1) above is added as a molecular weight regulator (terminator). If desired, an antioxidant such as sodium sulfite or hydro sulfite, and a branching agent such as

phloroglucin or isatin bisphenol may also be added in small amounts. A suitable reaction temperature is usually in the range of 0-150°C, preferably 5-40°C. While the reaction time depends on the reaction temperature, it is usually 0.5 minutes to 10 hours, preferably 1 minute to 2 hours. The pH of the reaction system is desirably kept at 10 or higher during the reaction.

On the other hand, according to the transesterification method, at least one selected from the group consisting of bisphenol A, bisphenol C, bisphenol MIBK, bisphenol BPAF, bisphenol Z, and bisphenol AP is mixed with a bisaryl carbonate, and reacted at high temperature under reduced pressure. Examples of the bisaryl carbonate include bisallyl carbonates such as diphenyl carbonate, di-p-tolyl carbonate, phenyl-p-tolyl carbonate, di-p-chlorophenyl carbonate, and dinaphthyl carbonate. It is also possible to use two or more types of these compounds in combination. The reaction is usually carried out at a temperature in the range of 150-350°C, preferably 200-300°C, and the final degree of pressure reduction is preferably 1 mmHg or lower to distill the phenol derived from the bisaryl carbonate generated by the transesterification reaction away from the system. While the reaction time depends on the reaction temperature and the degree of pressure reduction, it is usually about 1-24 hours. The reaction is preferably performed in an inert gas atmosphere such as nitrogen or argon. In addition, if desired, a molecular weight regulator, an antioxidant, and a branching agent can be added to carry out the reaction.

<Lithium salt>

While the lithium salt used in the present invention is not particularly limited, it preferably comprises at least one selected from the group consisting of lithium bis(trifluoromethanesulfonyl)imide, lithium trifluoromethanesulfonate, lithium hexafluorophosphate, lithium bis(fluorosulfonyl)imide, and lithium tetrafluoroborate.

[Electrolytic solution]

The electrolytic solution of the present invention contains the resin composition described above and preferably contains an organic solvent that dissolves the above polycarbonate resin and lithium salt. This organic solvent serves as the solvent for the electrolytic solution of the present invention. Specific examples of the organic solvent preferably used in the present invention include methylene chloride and various dialkyl carbonates (e.g., dimethyl carbonate, diethyl carbonate, methyl ethyl carbonate, etc.). In the present invention, it is also possible to use two or more of them in combination. Among them, methylene chloride is preferred because polycarbonate resins are relatively highly soluble in it.

In a preferred embodiment of the present invention, the content of the organic solvent in the electrolytic solution is preferably 50-99.95 mass%, more preferably 60-99 mass%, still more preferably 70-95 mass%, and particularly preferably 75-90 mass%.

If necessary, an anti-rust agent, an antioxidant, a dispersant, an UV absorber, a defoaming agent, a leveling agent, etc. may further be added to the electrolytic solution of the present invention.

The electrolyte of the present invention preferably have a conductivity of 1-500 μS/cm at 20°C, more preferably 10-300 μS/cm, still more preferably 15-250 μS/cm, and particularly preferably 15-230 μS/cm. The method described in the examples below can be used to measure the conductivity.

[Solid electrolyte]

The electrolytic solution of the present invention can be concentrated and partially gelled to obtain a gel polymer electrolyte. While the method of concentrating the electrolytic solution is not particularly limited, such a method may be, for example, removing some of the solvent by air-drying to give a high-viscosity liquid with a solidified surface.

A solid electrolyte can also be obtained by irradiating the electrolytic solution of the present invention with, for example, UV light at 365 nm under the conditions of 50 mW/cm for about 30 minutes to cause it to gel.

The solid electrolyte of the present invention is useful as an electrolyte material for Li polymer batteries and semi-solid-state batteries, and in particular can reduce the risk of leakage.

EXAMPLES

Hereinafter, examples of the present invention will be described along with comparative examples to illustrate the invention in detail, but the present invention is not limited to these examples.

1) Conductivity

The conductivity of a mixture of a polycarbonate resin, a lithium salt (Li salt), and methylene chloride was measured with a conductivity meter.

Equipment used: Waterproof conductivity meter AS650 manufactured by AS ONE CORPORATION
Measurement temperature: 20°C

2) Solubility of lithium salt (Li salt solubility)

The solubility of the lithium salt was visually evaluated after the mixture of the polycarbonate resin, the lithium salt (Li salt), and methylene chloride was stirred for 24 hours.

A: Transparent with no undissolved Li salt
B: No undissolved Li salt, but colored (white, brown, or the like, and not transparent)
C: Li salt precipitated

3) Appearance of resin composition

The appearance of the obtained resin composition was evaluated visually to determine whether it was transparent or not.

4) Viscosity-average molecular weight (Mv) of polycarbonate resin

Measurement instrument: Ubbelohde capillary viscometer
Solvent: Methylene chloride
Concentration of polycarbonate resin solution: 0.5 grams/deciliter
Measurement temperature: 25°C

Measurement was performed under the above conditions to determine the intrinsic viscosity [η] deciliter/gram at a Huggins' constant of 0.45 and the viscosity-average molecular weight was calculated by the following formula.

$$\eta = 1.23 \times 10^{-4} \times Mv^{0.83}$$

(Synthesis example 1)

In a mixture of 440 ml of a 9.0 w/w% aqueous sodium hydroxide solution and 200 ml of pure water, 83.0 g (0.34 mol) of 2,2-bis(4-hydroxyphenyl)-4-methylpentane (hereinafter abbreviated as "MIBK": manufactured by Honshu Chemical Industry Co., Ltd.) and 0.5 g of hydrosulfite were dissolved.
To this, 300 ml of methylene chloride was added and, while stirring and keeping the temperature at 15-25°C, 42.5 g of phosgene was then blown in for about 30 minutes.
After the phosgene blowing, 15.35 g of polyethylene glycol monomethyl ether 1000 (hereinafter abbreviated as "mPEG1000": manufactured by Tokyo Chemical Industry Co., Ltd.) was added as a molecular weight regulator (terminator) and thoroughly stirred to emulsify the reaction solution. After the emulsification, 0.5 ml of triethylamine was added, and the mixture was stirred at 20-30°C for about 1 hour.
After the polymerization, the reaction solution was separated into an aqueous phase and an organic phase, the organic phase was neutralized with phosphoric acid, and rinsing was repeated until the conductivity of the former liquid (aqueous phase) became 10 μS/cm or less. The resulting polymer solution was transferred onto an aluminum plate to remove the solvent by evaporation on a hot plate, and the resulting solid was further dried at 120°C for 24 hours to obtain a polymer solid.
A solution of this polymer at a concentration of 0.5 g/dl in methylene chloride as a solvent had an intrinsic viscosity of 0.44 dl/g at 20°C and a viscosity-average molecular weight (Mv) of 21,300. As a result of analyzing the obtained polymer by infrared absorption spectroscopy, absorption due to a carbonyl group at around 1,770 $cm^{-1}$ and absorption due to an ether bond at around 1,240 $cm^{-1}$ were observed, confirming that it was a polycarbonate resin with a carbonate bond (hereinafter abbreviated as "PC-1 ").

(Synthesis examples 2-10)

Polycarbonate resins PC-2-PC-10 were obtained in the same manner as in Synthesis example 1, using the raw materials listed in Table 1 below. The viscosity-average molecular weights (Mv) of the resulting polycarbonate resins are

shown in Table 1. The number-average molecular weights of mPEG 1000, mPEG 550, and mPEG 400 were 1000, 550, and 400, respectively.

[Table 1]

| | Raw materials for polycarbonate resin | | | | | | | |
|---|---|---|---|---|---|---|---|---|
| Type of PC | Type of monomer (1) | Weight (1) (g) | Type of monomer (2) | Weight (2) (g) | Copolymer ratio (mol) | End structure (Terminator) | Weight (g) | Mv of PC (ten thousand) |
| PC-1 | MIBK | 83.0 | - | - | - | mPEG 1000 | 15.33 | 2.1 |
| PC-2 | MIBK | 83.0 | - | - | - | mPEG550 | 8.44 | 2.1 |
| PC-3 | MIBK | 90.0 | - | - | - | mPEG400 | 7.61 | 2.2 |
| PC-4 | BPA | 70.0 | - | - | - | mPEG 1000 | 15.33 | 2.6 |
| PC-5 | BPAF | 103.0 | - | - | - | mPEG 1000 | 15.33 | 0.9 |
| PC-6 | BPZ | 82.3 | - | - | - | mPEG 1000 | 15.33 | 1.8 |
| PC-7 | BPAP | 44.5 | MIBK | 41.5 | 50/50 | mPEG 1000 | 15.33 | 1.9 |
| PC-8 | MIBK | 83.0 | - | - | - | PTBP | 1.67 | 2.3 |
| PC-9 | MIBK | 83.0 | - | - | - | CEPB | 5.57 | 1.8 |
| PC-10 | MIBK | 83.0 | - | - | - | POBB | 2.98 | 1.8 |

| | |
|---|---|
| mPEG 1000 | Polyethylene glycol monomethyl ether 1000 |
| mPEG550 | Polyethylene glycol monomethyl ether 550 |
| mPEG400 | Polyethylene glycol monomethyl ether 400 |
| PTBP | p-tert-Butylphenol |
| CEPB | Hexadecyl p-hydroxybenzoate |
| POBB | Butyl p-hydroxybenzoate |

(Example 1)

3 g of the polycarbonate resin (PC-1) obtained in Synthesis example 1, 0.29 g of lithium salt (Li salt), and 12 g of methylene chloride were mixed in a disposable cup to prepare a mixture. The resulting mixture is useful as an electrolytic solution.

The resulting mixture was air-dried at 25°C for 24 hours to remove methylene chloride to obtain a film-like resin composition. The resulting resin composition is useful as a film or solid electrolyte.

The conductivity and lithium salt solubility of the mixture (electrolytic solution) obtained above and the result of the appearance evaluation of the resulting resin composition (solid electrolyte) are shown in Table 2 below.

(Examples 2-27)

Mixtures and resin compositions were obtained in the same manner as in Example 1, except that the raw materials shown in Table 2 below were used. The conductivities and lithium salt solubilities of the obtained mixtures (electrolytic solutions) and the results of the appearance evaluation of the resulting resin compositions (solid electrolytes) are shown in Table 2 below.

[Table 2]

| | Resin composition | | Composition of mixture | | | Composition ratio of resin composition and Li salt | | Physical properties | | |
|---|---|---|---|---|---|---|---|---|---|---|
| | PC | Type of Li salt | PC (g) | Li salt (g) | Methylene chloride (g) | PC (mass%) | Li salt (mass %) | Conductivity (μS/cm) | Li salt solubility | Appearance of resin composition |
| Example 1 | PC-1 | A | 3 | 0.29 | 12 | 91.2 | 8.8 | 206 | A | Transparent |
| Example 2 | PC-1 | A | 3 | 0.58 | 12 | 83.8 | 16.2 | 80 | B | Transparent |
| Example 3 | PC-1 | A | 3 | 0.86 | 12 | 77.7 | 22.3 | 58 | B | Transparent |
| Example 4 | PC-1 | B | 3 | 0.16 | 12 | 94.9 | 5.1 | 66 | A | Colored (cloudy) |
| Example 5 | PC-1 | B | 3 | 0.31 | 12 | 90.6 | 9.4 | 37 | B | Colored (cloudy) |
| Example 6 | PC-1 | B | 3 | 0.48 | 12 | 86.2 | 13.8 | 17 | B | Colored (cloudy) |
| Example 7 | PC-1 | C | 3 | 0.15 | 12 | 95.2 | 4.8 | 174 | B | Transparent |
| Example 8 | PC-1 | C | 3 | 0.30 | 12 | 90.9 | 9.1 | 140 | B | Colored (brown) |
| Example 9 | PC-1 | C | 3 | 0.45 | 12 | 87.0 | 13.0 | 139 | B | Colored (brown) |
| Example 10 | PC-2 | A | 3 | 0.29 | 12 | 91.2 | 8.8 | 73 | A | Transparent |
| Example 11 | PC-2 | A | 3 | 0.58 | 12 | 83.8 | 16.2 | 47 | B | Transparent |
| Example 12 | PC-2 | A | 3 | 0.86 | 12 | 77.7 | 22.3 | 37 | B | Transparent |
| Example 13 | PC-3 | A | 3 | 0.29 | 12 | 91.2 | 8.8 | 58 | A | Transparent |
| Example 14 | PC-3 | A | 3 | 0.58 | 12 | 83.8 | 16.2 | 43 | B | Transparent |
| Example 15 | PC-3 | A | 3 | 0.86 | 12 | 77.7 | 22.3 | 43 | B | Transparent |
| Example 16 | PC-4 | A | 3 | 0.29 | 12 | 91.2 | 8.8 | 203 | B | Transparent |
| Example 17 | PC-4 | A | 3 | 0.58 | 12 | 83.8 | 16.2 | 77 | B | Transparent |
| Example 18 | PC-4 | A | 3 | 0.86 | 12 | 77.7 | 22.3 | 43 | B | Transparent |
| Example 19 | PC-5 | A | 3 | 0.29 | 12 | 91.2 | 8.8 | 187 | A | Transparent |
| Example 20 | PC-5 | A | 3 | 0.58 | 12 | 83.8 | 16.2 | 85 | B | Transparent |
| Example 21 | PC-5 | A | 3 | 0.86 | 12 | 77.7 | 22.3 | 48 | B | Transparent |
| Example 22 | PC-6 | A | 3 | 0.29 | 12 | 91.2 | 8.8 | 232 | A | Transparent |
| Example 23 | PC-6 | A | 3 | 0.58 | 12 | 83.8 | 16.2 | 125 | B | Transparent |
| Example 24 | PC-6 | A | 3 | 0.86 | 12 | 77.7 | 22.3 | 59 | B | Transparent |
| Example 25 | PC-7 | A | 3 | 0.29 | 12 | 91.2 | 8.8 | 174 | A | Transparent |
| Example 26 | PC-7 | A | 3 | 0.58 | 12 | 83.8 | 16.2 | 77 | A | Transparent |
| Example 27 | PC-7 | A | 3 | 0.86 | 12 | 77.7 | 22.3 | 38 | B | Transparent |
| Comparative example 1 | PC-8 | A | 3 | 0.29 | 12 | 91.2 | 8.8 | <1.0 | C | * |

(continued)

| | Resin composition | | Composition of mixture | | | Composition ratio of resin composition and Li salt | | Physical properties | | |
|---|---|---|---|---|---|---|---|---|---|---|
| | PC | Type of Li salt | PC (g) | Li salt (g) | Methylene chloride (g) | PC (mass%) | Li salt (mass %) | Conductivity (μS/cm) | Li salt solubility | Appearance of resin composition |
| Comparative example 2 | PC-9 | A | 3 | 0.29 | 12 | 91.2 | 8.8 | <1.0 | C | * |
| Comparative example 3 | PC-10 | A | 3 | 0.29 | 12 | 91.2 | 8.8 | 1.6 | C | * |

*Homogeneous mixture could not be obtained (Li salt precipitated in the mixture), and homogeneous film (solid) could not be obtained.

| Type of Li salt | Abbreviated name | Name |
|---|---|---|
| A | LiTFSI | Lithium bis(trifluoromethanesulfonyl)imide |
| B | LiFSI | Lithium trifluoromethanesulfonate |
| C | LiPF6 | Lithium hexafluorophosphate |

## Claims

**1.** A resin composition comprising a polycarbonate resin and a lithium salt, wherein:

the polycarbonate resin comprises a structural unit (A) derived from at least one selected from the group consisting of bisphenol A, bisphenol C, bisphenol MIBK, bisphenol BPAF, bisphenol Z, and bisphenol AP, which are represented by the following structural formulae; and

an end structure of the polycarbonate resin comprises an end structure derived from a polyalkylene glycol monoalkyl ether represented by general formula (1) below:

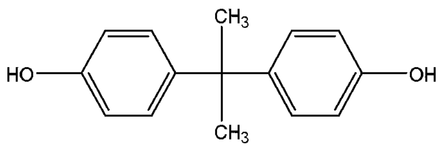

(Bisphenol A)

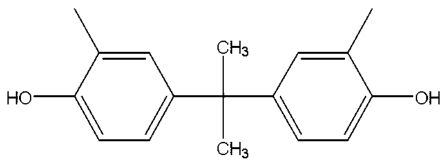

(Bisphenol C)

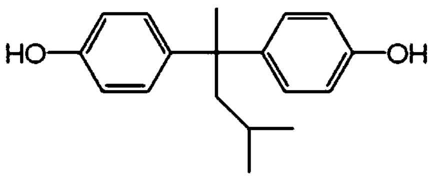

(Bisphenol MIBK)

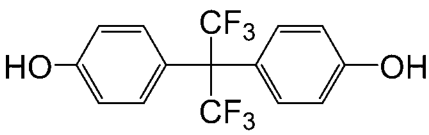

(Bisphenol BPAF)

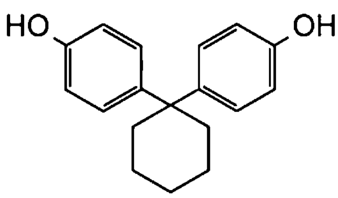

(Bisphenol Z)

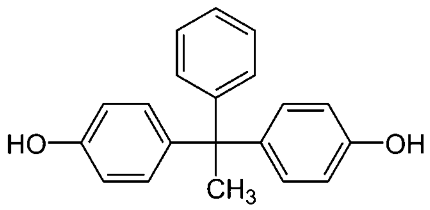

(Bisphenol AP)

$$HO-(R_1-O)_n-R_2 \quad (1)$$

in general formula (1), $R_1$ represents a C2-C20 alkylene group, $R_2$ represents a C1-C20 alkyl group, and n represents an integer from 3-120.

2. The resin composition according to claim 1, comprising the polycarbonate resin in an amount of 30.0-99.0 mass% relative to the total amount of the polycarbonate resin and the lithium salt in the resin composition.

3. The resin composition according to claim 1 or 2, wherein a number-average molecular weight of the polyalkylene glycol monoalkyl ether is 200-5,000.

4. The resin composition according to any one of claims 1-3, wherein a viscosity-average molecular weight (Mv) of the polycarbonate resin is 5,000-50,000.

5. The resin composition according to any one of claims 1-4, comprising the lithium salt in an amount of 1.0-70 mass% relative to the total amount of the polycarbonate resin and the lithium salt in the resin composition.

6. The resin composition according to any one of claims 1-5, wherein the lithium salt comprises at least one selected from the group consisting of lithium bis(trifluoromethanesulfonyl)imide, lithium trifluoromethanesulfonate, lithium hexafluorophosphate, lithium bis(fluorosulfonyl)imide, and lithium tetrafluoroborate.

7. An electrolytic solution comprising the resin composition according to any one of claims 1-6.

8. The electrolytic solution according to claim 7, wherein a conductivity of the electrolytic solution is 1-500 mS/cm.

9. A film comprising the resin composition according to any one of claims 1-6.

10. A solid electrolyte comprising the resin composition according to any one of claims 1-6.

**INTERNATIONAL SEARCH REPORT**

International application No.
**PCT/JP2024/001047**

**A. CLASSIFICATION OF SUBJECT MATTER**

***C08L 69/00***(2006.01)i; ***C08G 64/04***(2006.01)i; ***C08K 3/32***(2006.01)i; ***C08K 5/41***(2006.01)i; ***C08K 5/42***(2006.01)i; ***H01B 1/06***(2006.01)i; ***H01M 10/052***(2010.01)i; ***H01M 10/0565***(2010.01)i; ***H01M 10/0567***(2010.01)i
FI: C08L69/00; C08G64/04; H01M10/0565; H01M10/0567; H01M10/052; H01B1/06 A; C08K5/41; C08K5/42; C08K3/32

According to International Patent Classification (IPC) or to both national classification and IPC

**B. FIELDS SEARCHED**

Minimum documentation searched (classification system followed by classification symbols)

C08L69/00; C08G64/04; C08K3/32; C08K5/41; C08K5/42; H01B1/06; H01M10/052; H01M10/0565; H01M10/0567

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | CN 101735443 A (CHINA BLUESTAR [GROUP] CO., LTD.) 16 June 2010 (2010-06-16) entire text | 1-10 |
| A | JP 62-79222 A (GENERAL ELECTRIC COMPANY) 11 April 1987 (1987-04-11) entire text | 1-10 |
| A | JP 2017-197704 A (SUMIKA POLYCARBONATE LTD.) 02 November 2017 (2017-11-02) entire text | 1-10 |
| A | JP 2006-199799 A (TOHO CHEMICAL INDUSTRY CO., LTD.) 03 August 2006 (2006-08-03) entire text | 1-10 |
| A | JP 2005-232286 A (IDEMITSU KOSAN CO., LTD.) 02 September 2005 (2005-09-02) entire text | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2024** | **19 March 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/001047**

**C. DOCUMENTS CONSIDERED TO BE RELEVANT**

| Category* | Citation of document, with indication, where appropriate, of the relevant passages | Relevant to claim No. |
|---|---|---|
| A | JP 2005-232287 A (IDEMITSU KOSAN CO., LTD.) 02 September 2005 (2005-09-02) entire text | 1-10 |

Form PCT/ISA/210 (second sheet) (July 2022)

**INTERNATIONAL SEARCH REPORT**
**Information on patent family members**

International application No.
**PCT/JP2024/001047**

| Patent document cited in search report | Publication date (day/month/year) | Patent family member(s) | Publication date (day/month/year) |
|---|---|---|---|
| CN 101735443 A | 16 June 2010 | (Family: none) | |
| JP 62-79222 A | 11 April 1987 | US 4663399 A<br>entire text<br>EP 213465 A2 | |
| JP 2017-197704 A | 02 November 2017 | (Family: none) | |
| JP 2006-199799 A | 03 August 2006 | (Family: none) | |
| JP 2005-232286 A | 02 September 2005 | US 2008/0221295 A1<br>entire text<br>WO 2005/080468 A1<br>DE 112005000346 T<br>CN 1918210 A<br>KR 10-2007-0012346 A<br>TW 200535164 A | |
| JP 2005-232287 A | 02 September 2005 | US 2008/0221295 A1<br>entire text<br>WO 2005/080468 A1<br>DE 112005000346 T<br>KR 10-2007-0012346 A<br>TW 200535164 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000357533 A